(19) Europäisches Patentamt
European Patent Office
Office européen des brevets

(11) EP 1 112 905 A1

(12) EUROPÄISCHE PATENTANMELDUNG

(43) Veröffentlichungstag:
**04.07.2001 Patentblatt 2001/27**

(51) Int Cl.[7]: **B60T 8/44**, B60T 8/48

(21) Anmeldenummer: **99126203.1**

(22) Anmeldetag: **30.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ROBERT BOSCH GmbH**
**70469 Stuttgart (DE)**

(72) Erfinder:
- **Schmidt, Hanniel**
  **76307 Karlsbad (DE)**
- **Vollert, Herbert**
  **71665 Vaihingen/Enz (DE)**

(74) Vertreter: **Schäfer, Wolfgang, Dipl.-Ing. et al**
**Dreiss, Fuhlendorf, Steimle & Becker**
**Postfach 10 37 62**
**70032 Stuttgart (DE)**

Bemerkungen:
Geänderte Patentansprüche gemäss Regel 86(2) EPU

(54) **Fahrzeugbremsanlage**

(57) Fahrzeugbremsanlage und Verfahren zum Betrieb einer Fahrzeugbremsanlage, die zumindest eine Rückförderpumpe (25,125) zum Aufbau eines Bremsdrucks aufweist, wobei die Rückförderpumpe, ein vor der Rückförderpumpe angeordnetes Ansaugventil (ASV1,ASV2) und/oder ein hinter der Rückförderpumpe angeordnetes Umschaltventil (USV1,USV2) in Abhängigkeit eines Bremsbefehls (BB;PHZ,SPED) angesteuert werden, und wobei die Rückförderpumpe, das Ansaugventil und/oder das Umschaltventil derart angesteuert werden, daß der Zusammenhang zwischen dem Bremsbefehl und dem Bremsdruck (PRZ1,PRZ2) hysteresartig ist.

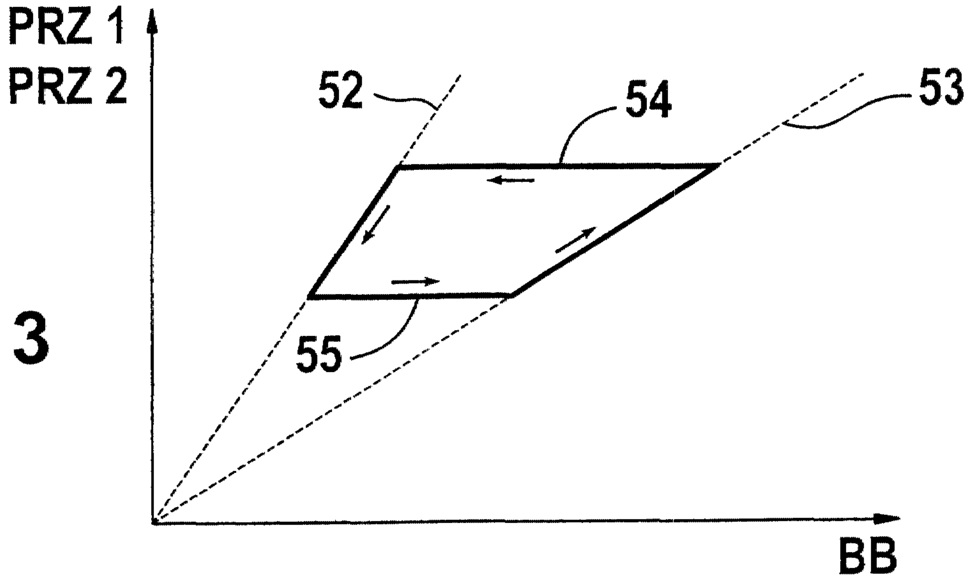


FIG. 3

EP 1 112 905 A1

## Beschreibung

Die Erfindung betrifft eine, insbesondere hydraulische, Fahrzeugbremsanlage, die zumindest eine Rückförderpumpe zum Aufbau eines Bremsdrucks aufweist, wobei die Rückförderpumpe, ein vor der Rückförderpumpe angeordnetes Ansaugventil und/oder ein hinter der Rückförderpumpe angeordnetes Umschaltventil in Abhängigkeit eines Bremsbefehls angesteuert werden. Die Erfindung betrifft ferner ein Verfahren zum Betrieb einer solchen Fahrzeugbremsanlage. Eine derartige Fahrzeugbremsanlage offenbart z. B. die DE 195 01 760 A1.

Es ist Aufgabe der Erfindung, für eine derartige Fahrzeugbremsanlage das Komfort- bzw. das Sicherheitsempfinden des Fahrers beim Bremsen zu erhöhen.

Die Aufgabe wird erfindungsgemäß durch ein Verfahren gemäß Anspruch 1 sowie durch eine, insbesondere hydraulische, Fahrzeugbremsanlage gemäß Anspruch 10 gelöst, die zumindest eine Rückförderpumpe zum Aufbau eines Bremsdrucks aufweist. Dabei werden die Rückförderpumpe, ein vor der Rückförderpumpe angeordnetes Ansaugventil und/oder ein hinter der Rückförderpumpe angeordnetes Umschaltventil in Abhängigkeit eines Bremsbefehls derart angesteuert, daß der Zusammenhang zwischen dem Bremsbefehl und dem Bremsdruck hystereseartig ist.

Die derartige Einstellung der Rückförderpumpe, des Ansaugventils und/oder des Umschaltventils, daß der Zusammenhang zwischen dem Bremsbefehl und dem Bremsdruck hystereseartig ist, erfolgt dabei insbesondere dadurch, daß die Rückförderpumpe, das Ansaugventil und/oder das Umschaltventil derart angesteuert werden, daß sich der Zusammenhang zwischen dem Bremsbefehl und dem Bremsdruck bei Vergrößerung des Bremsbefehls von dem Zusammenhang zwischen dem Bremsbefehl und dem Bremsdruck bei Verringerung des Bremsbefehls unterscheidet.

In vorteilhafter Ausgestaltung der Erfindung wird die Rückförderpumpe derart angesteuert, daß der Zusammenhang zwischen dem Bremsbefehl und dem Bremsdruck hystereseartig ist.

In weiterhin vorteilhafter Ausgestaltung der Erfindung wird das Ansaugventil, insbesondere zusätzlich, derart angesteuert, daß der Zusammenhang zwischen dem Bremsbefehl und dem Bremsdruck hystereseartig ist.

In weiterhin vorteilhafter Ausgestaltung der Erfindung wird das Umschaltventil, insbesondere zusätzlich, derart angesteuert, daß der Zusammenhang zwischen dem Bremsbefehl und dem Bremsdruck hystereseartig ist.

In weiterhin vorteilhafter Ausgestaltung der Erfindung weist die Fahrzeugbremsanlage einen Hauptbremszylinder zur Einstellung eines auf den Bremsdruck wirkenden Hauptzylinderdrucks auf, wobei der Hauptzylinderdruck der Bremsbefehl ist.

In weiterhin vorteilhafter Ausgestaltung der Erfindung weist die Fahrzeugbremsanlage ein Bremspedal zur Einstellung des Bremsdrucks auf, wobei die Stellung des Bremspedals der Bremsbefehl ist.

In weiterhin vorteilhafter Ausgestaltung der Erfindung werden die Rückförderpumpe, das Ansaugventil und/oder das Umschaltventil derart angesteuert, daß der Bremsdruck bei Vergrößerung des Bremsbefehls geringer steigt, als er bei Verringerung des Bremsbefehls sinkt.

In weiterhin vorteilhafter Ausgestaltung der Erfindung ist der hystereseartige Zusammenhang der Hysterese eines Unterdruck-Bremskraftverstärkers nachgebildet. Ein Ausführungsbeispiel für einen Unterdruck-Bremskraftverstärker (auch Vakuum-Bremskraftverstärker genannt) kann dem Buch "Kraftfahrtechnisches Taschenbuch", Bosch, ISBN 3-540-62219-5, 1995, Seite 623 entnommen werden.

Weitere Vorteile und Einzelheiten ergeben sich aus nachfolgender Beschreibung von Ausführungsbeispielen. Im Einzelnen zeigen:

| | |
|---|---|
| Fig. 1 | eine hydraulische Fahrzeugbremsanlage, |
| Fig. 2 | eine Steuereinrichtung |
| Fig. 3 | ein Hystereseverhalten |
| Fig. 4 | ein alternatives Hystereseverhalten |
| Fig. 5 | ein weiteres alternatives Hystereseverhalten |
| Fig. 6 | ein bespielhaftes Flußdiagramm zur Einstellung des Bremsdrucks mit einem Hystereseeffekt |

Fig. 1 zeigt eine im wesentlichen in der DE 195 01 760 A1 offenbarte hydraulische Fahrzeugbremsanlage, wobei jedem Rad des Fahrzeugs ein Radbremszylinder zugeordnet ist. Der Radbremszylinder des Rades hinten links ist mit 10, der des Rades hinten rechts mit 11, der des Rades vorne links mit 12 und der des Rades vorne rechts mit 13 bezeichnet. Jeder dieser Radbremszylinder 10 bis 13 steht mit einem Auslaßventil AVHL, AVHR, AVVL, AVVR sowie mit einem Einlaßventil EVHL, EVHR, EVVL, EVVR in Verbindung. Das dem Radbremszylinder 10 zugeordnete Auslaßventil ist mit AVHL, das dem Radbremszylinder 11 zugeordnete Auslaßventil ist mit AVHR, das dem Radzylinder 12 zugeordnete Auslaßventil ist mit AVVL und das dem Radbremszylinder 13 zugeordnete Auslaßventil ist mit AVVR bezeichnet. Das dem Radbremszylinder 10 zugeordnete Einlaßventil ist mit EVHL, das dem Radbremszylinder 11 zugeordnete Einlaßventil ist mit EVHR, das dem Radbremszylinder 12 zugeordnete Einlaßventil ist mit EVVL und das dem Radbremszylinder 13 zugeordnete Einlaßventil ist mit EVVR bezeichnet.

Die Auslaßventile AVHL, AVHR, AVVL, AVVR verbinden in ihrer durch Magneterregung herbeiführbaren Arbeitsstellung die Radbremszylinder über ein Rückschlagventil 20 bzw. 120 mit einer Rückförderpumpe 25 bzw. 125. In ihrer unerregten Rundstellung sperren sie diese Verbindung. In der Verbindung zwischen den Auslaßventilen AVHL, AVHR, AVVL, AVVR und der Rückförderpumpe 25 bzw. 125 ist ein Niederdruckspeicher 30 bzw. 130 angeschlossen.

Die Einlaßventile EVHL, EVHR, EVVL, EVVR ermöglichen in ihrer unerregten Grundstellung einen ungehinderten Durchlaß zwischen den Radbremszylindern und mit USV1 und USV2 bezeichneten Umschaltventilen. In der durch Magneterregung herbeiführbaren Arbeitsstellung sperren die Einlaßventile EVHL, EVHR, EVVL, EVVR diesen Durchlaß. Jeweils zwei Radbremszylindern 12, 13 bzw. 10, 11 ist ein Ansaugventil ASV1 bzw. ASV2 und ein Umschaltventil USV1 bzw. USV2 zugeordnet. Diese dienen zur Bereitstellung eines Bremsversorgungsdruckes, insbesondere im Zusammenhang mit einer Antriebsschlupfreglung (ASR) oder einer Fahrdynamikregelung (FDR). Nähre Einzelheiten zu einer Antriebsschlupfreglung oder einer Fahrdynamikregelung können z. B. dem Artikel "FDR die Fahrdynamikreglung von Bosch", von A. van Zanten, R. Erhardt und G. Pfaff, ATZ Automobiltechnische Zeitschrift 96 (1994) 11 Seiten 674 bis 689 offenbart entnommen werden.

Die Umschaltventile USV2 bzw. USV1 sind in der Verbindungsleitungzwischen den Einlaßventilen EVHL und EVHR bzw. EVVL und EVVR und einem Hauptbremszylinder 15 angeordnet. Die Umschaltventile USV1 bzw. USV2 sind in ihrer unerregten Grundstellung geöffnet. Die Ansaugventile ASV1 und ASV2 sind in der unerregten Grundstellung gesperrt. Die Ansaugventile ASV1 und ASV2 sind zwischen dem Hauptbremszylinder 15 und dem saugseitigen Anschluß der Rückförderpumpen 25 und 125 angeordnet und somit mit den Auslaßventilen AVHL, AVHR, AVVL, AVVR verbunden.

Den Umschaltventilen USV2 und USV1 ist ein Rückschlagventil mit zu den Einlaßventilen EVHL, EVHR, EVVL, EVVR weisender Durchflußrichtung parallel geschaltet.

Zwischen dem druckseitigen Ausgang der Rückförderpumpe 25 bzw. 125 und den Umschaltventilen USV2 und USV1 ist jeweils ein Dämpfer 35 bzw. 135 angeordnet.

Im Bereich eines Fahrpedals 40 ist ein Sensor 60 angeordnet, der ein Signal SPED bereitstellt, das den Fahrerwunsch anzeigt.

In alternativer Ausgestaltung zur Anordnung des Sensors 60 ist in der Leitung zwischen dem Hauptbremszylinder 15 und den Umschaltventilen USV1 bzw. USV2 ein Sensor 70 angeordnet. Dieser Sensor 70 stellt ein Signal PHZ bereit, das den Druck (Hauptbremszylinderdruck) im Hauptbremszylinder kennzeichnet. Es kann auch vorgesehen werden, sowohl einen Sensor 60 als auch einen Sensor 70 einzusetzen.

Desweiteren können noch weitere Sensoren 80 und 85 vorgesehen sein, die in der Leitung zwischen den Auslaß- AVHR und AVVL bzw. Einlaßventilen EVHR und EVVL und den Radbremszylindern 11 und 12 angeordnet sind, und ein Signal PRZ1 bzw. PRZ2 bereitstellen, das den Druck (Bremsdruck) in den Radbremszylindern kennzeichnet.

Im Normalbetrieb befinden sich die Magnetventile in ihrer unerregten Grundstellung. Bei Betätigung des Bremspedals 40 durch den Fahrer fließt die Bremsflüssigkeit durch die Umschaltventile USV2 bzw. USV1 und die Einlaßventile EVHL, EVHR bzw. EVVL, EVVR in die jeweiligen Radbremszylinder 10, 11 bzw. 12, 13. Wird eine Blockierneigung eines Rades erkannt, so wird das entsprechende Einlaßventil EVHL, EVHR bzw. EVVL, EVVR in seine Sperrstellung gebracht und das entsprechende Auslaßventil AVHL, AVHR bzw. AVVL, AVVR in seine Arbeitsstellung. In dieser Stellung wird durch die Rückförderpumpe Bremsflüssigkeit aus diesem Radbremszylinder abgesaugt.

Im ASR-Betrieb werden die Ansaugventile ASV1 und ASV2 und die Umschaltventile USV1 und USV2 in ihre Arbeitsstellung gebracht und die Rückförderpumpen aktiviert. Dadurch wird in den Radbremszylindern 10, 11, 12, 13 solange Druck aufgebaut, solange sich die Einlaß- und die Auslaßventile in ihrer Grundstellung befinden.

Befinden sich die Einlaßventile EVHL, EVHR, EVVL, EVVR und die Auslaßventile AVHL, AVHR, AVVL, AVVR in ihrer Grundstellung, so wird in den Radbremszylindern 10, 11, 12, 13 Druck aufgebaut. Befinden sich die Einlaßventile in ihrer Arbeitsstellung und die Auslaßventile in ihrer Ruhestellung, so verbleibt der Druck in den Radbremszylindern 10, 11, 12, 13 auf einem konstanten Wert. Befinden sich die Auslaßventile AVHL, AVHR, AVVL, AVVR und die Einlaßventile EVHL, EVHR, EVVL, EVVR in ihrer Arbeitsstellung. so wird in den Radbremszylindern 10, 11, 12, 13 Druck abgebaut.

Es kann vorgesehen sein, daß der Haupbremszylinder 15 einen Unterdruck-Bremskraftverstärker aufweist.

Die Auslaßventile AVHL, AVHR, AVVL, AVVR werden in vorteilhafter Ausgestaltung der Erfindung mit in die hystereseartige Einstellung des Bremsdrucks einbezogen. Die Auslaßventile AVHL, AVHR, AVVL, AVVR werden dabei in besonders vorteilhafter Ausgestaltung der Erfindung derart angesteuert, daß die Bremskraft im unteren Bremsbereich im wesentlichen von der Stellung des Bremspedals abhängt und weniger von der Kraft, mit der das Bremspedal getreten wird.

In Fig. 2 ist mit 200 eine Steuereinrichtung bezeichnet, die die Signale der Sensoren 70, 80, 85 erfaßt und ausgehend von diesen Signalen abhängig beispielsweise vom Fahrerwunsch Ansteuersignale zur Beaufschlagung der Einlaßventile EVHL, EVHR, EVVL, EVVR, der Auslaßventile AVHL, AVHR, AVVL, AVVR, der Rückförderpumpen 25 bzw. 125, der Umschaltventile USV1, USV2 und der Ansaugventile ASV1, ASV2 ausgibt. An Stelle des Sensors 70 kann auch der Sensor 60 mit der Steuereinrichtung 200 verbunden sein. In diesem Falle erhält die Steuereinrichtung 200 an Stelle des Meßwerts PHZ den Meßwert SPED. Es kann auch vorgesehen sein, daß die Steuereinrichtung 200 sowohl mit dem Sensor 60 als auch mit dem Sensor 70 verbunden ist.

Auf der Steuereinrichtung 200 ist ein Hystereseverhalten in der Art implementiert; daß die Rückförderpumpen 25, 125 die Ansaugventile ASV1, ASV2 und/oder die Umschaltventile USV1, USV2 so durch einen Bremsbefehl angesteuert, daß der Zusammenhang zwischen dem Bremsbefehl und dem Bremsdruck PRZ1, PRZ2 hystereseartig ist. Der Bremsbefehl ist dabei entweder der vom Sensor 60 ermittelte Wert SPED oder der vom Sensor 70 ermittelte Hauptzylinderdruck PHZ. Unter hystereseartigem Zusammenhang ist dabei insbesondere zu verstehen, daß sich der Zusammenhang zwischen dem Bremsbefehl und dem Bremsdruck PRZ1, PRZ2 bei Vergrößerung des Bremsbefehls von dem Zusammenhang zwischen dem Bremsbefehl und dem Bremsdruck PRZ1, PRZ2 bei Verringerung des Bremsbefehls unterscheidet.

Fig. 3 zeigt ein Beispiel für solches Hystereseverhalten. Dabei ist der Druck (Bremsdruck) PRZ1 bzw. PRZ2 in den Radbremszylindern 10, 11, 12, 13 über einen Bremsbefehl BB aufgetragen. Der Bremsbefehl BB kann der Wert PHZ oder der Wert SPED sein. Steigt der Bremsdruck PRZ1 bzw. PRZ2, so erfolgt dieser Anstieg gemäß der Gerade 53 mit der Geradengleichung

$$PRZ1 = MV \cdot BB$$

bzw.

$$PRZ2 = MV \cdot BB$$

Sinkt der Bremsdruck PRZ1 bzw. PRZ2, so erfolgt das Absenken des Bremsdrucks PRZ1 bzw. PRZ2 gemäß der Gerade 52 mit der Geradengleichung

$$PRZ1= MR \cdot BB$$

bzw.

$$PRZ2 = MR \cdot BB$$

Zwischen den beiden Geraden 52 und 53 verbleibt der Bremsdruck PRZ1 bzw. PRZ2 bei Veränderung des Bremsbefehls BB konstant (vergleiche Abschnitte 54 und 55).

Fig. 4 zeigt ein alternatives auf der Steuerungseinrichtung 200 implementierbares Hystereseverhalten. Das Hystereseverhalten gemäß Fig. 4 unterscheidet sich vom Hystereseverhalten gemäß Fig. 3 dadurch, daß die Abschnitte 54 und 55 eines konstanten Bremsdrucks durch Abschnitte 56 und 57 mit einem leicht ansteigendem Zusammenhang zwischen dem Bremsdruck PRZ1 bzw. PRZ2 und dem Bremsbefehl BB ersetzt sind.

Fig. 5 zeigt ein weiteres alternatives Hystereseverhalten, daß auf der Steuereinrichtung 200 implementiert werden kann. Bei diesem Hystereseverhalten sind die Geraden 52 und 53 durch die Funktion 58 und 59 ersetzt. Zudem sind die Übergangsbereiche abgerundet gestaltet. Dieses Hystereseverhalten eignet sich besonders zur Regelung des Bremsdrucks PRZ1 bzw. PRZ2. Ein derartiges Hystereseverhalten bietet für den Fahrer beim Bremsen ein besonders gutes Sicherheits- bzw. Komfortempfinden.

Fig. 6 zeigt ein Flußdiagramm zur bespielhaften Einstellung des Bremsdrucks mit einem Hysteresverhalten gemäß Fig. 3. Ein derartiges Plusdiagramm ist in beispielhafter Ausgestaltung auf dem Steuergerät 200 in Fig. 2 implementiert. Der Ablauf beginnt mit einen Initialisierungsschritt 300, in dem ein Schwellwert HV gleich 0 gesetzt wird. Dem Initialisierungsschritt 300 folgt ein Initialisierungsschritt 301, in dem ein Schwellwert HR gleich einem Maximalwert MAX gesetzt wird. Der Maximalwert MAX entspricht z.B. dem maximal möglichen Bremsdruck PRZ1 bzw. PRZ2.

Dem Initialisierungsschritt 301 folgt ein Schritt 302. In dem Schritt 302 wird der durch den Sensor 70 ermittelte Wert PHZ für den Druck im Hauptbremszylinder 15 eingelesen, das heißt im Ausführungsbeispiel gemäß Fig. 6 entspricht der Hauptbremszylinderdruck PHZ dem Bremsbefehl BB. Anschließend überprüft die Abfrage 310, ob die Betätigung des Bremspedals 40 ein bestimmtes Maß überschreitet, d.h., ob $PHZ<S1$ nicht mehr gilt, wobei S1 ein Schwellwert ist. Gilt $PHZ<S1$, so kehrt das Programm zurück zum Schritt 302. Beim nächsten Programmdurchlauf wird der Wert des Drucksignals PHZ erneut gemessen und es erfolgt erneut die Abfrage 310. Vorzugsweise wird im Schritt 302 der Hauptzylinderdruck PHZ mit einer Abtastrate erfaßt, die kleiner als eine Millisekunde ist. Der Schritt 302 entspricht dem Schritt 300 in Fig. 3 der DE 195 01 760 A1. Die Abfrage 310 entspricht der Abfrage 310 in Fig. 3 der DE 195 01 760 A1.

Erkennt die Abfrage 310, daß der Hauptzylinderdruck PHZ größer oder gleich den Schwellwert S1 ist, so folgt der Schritt 320, in dem die Änderungsgeschwindigkeit PA des Hauptzylinderdrucks PHZ ermittelt wird. Hierzu wird die Änderung $\Delta PHZ$ des Hauptzylinderdrucks durch die Zeitspanne $\Delta t$ seit der letzten Druckerfassung dividiert. Der Schritt 320 entspricht dem Schritt 320 in Fig. 3 der DE 195 01 760 A1.

Anschließend überprüft die Abfrage 330, ob der Betrag der Änderungsgeschwindigkeit PA des Hauptzylinderdrucks größer als ein zweiter Schwellwert S2 ist. Ist dies nicht der Fall, so folgt Schritt 340, der z. B. dem Schritt 340 in Fig. 3 der DE 195 01 760 A1 entspricht. Im Schritt 340 erfolgt die Ansteuerung der Rückförderpumpen 25, 125 und gegebenenfalls der Auslaßventile ASV1 und ASV2 beziehungsweise der Umschaltventile USV1 und USV2 so, daß der Bremsdruck PRZ1 bzw. PRZ2 konstant bleibt. Die Abfrage 330 entspricht der Abfrage 330 in Fig. 3 der DE 195 01 760 A1.

Erkennt die Abfrage 330 dagegen, daß der Betrag der Änderungsgeschwindigkeit PA größer als der Schwellwert S2 ist, so erfolgt die Abfrage 350, die der Abfrage 350 in Fig. 3 der DE 195 01 760 A1 entspricht. Die Abfrage 350 erkennt, ob die Änderungsgeschwindigkeit größer 0 oder kleiner 0 ist. Ist die Änderungsgeschwindigkeit PA nicht größer 0, so folgt die Abfrage 351, ob der Hauptzylinderdruck PHZ kleiner als der Schwellwert HR ist. Ist dies nicht der Fall, so folgt der Schritt 340. Ist der Hauptzylinderdruck PHZ dagegen kleiner als der Schwellwert HR, so folgt ein Schritt 353, in dem der Schwellwert HV gemäß dem Zusammenhang

$$HV = \frac{MR}{MV} PHZ$$

berechnet wird.

Dem Schritt 353 schließt sich ein Schritt 360 an. Im Schritt 360 erfolgt die Ansteuerung der Rückförderpumpen 25, 125 und gegebenenfalls der Auslaßventile ASV1 und ASV2 beziehungsweise der Umschaltventile USV1 und USV2 so, daß der Bremsdruck PRZ1 bzw. PRZ2 um einen bestimmten Betrag verringert. In bespielhafter Ausgestletung entspricht der Schritt 360 dem Schritt 360 in Fig. 3 der DE 195 01 760 A1.

Ist die Druckänderung PA größer 0, so folgt die Abfrage 352, ob der Hauptzylinderdruck PHZ größer als der Schwellwert HV ist. Ist dies nicht der Fall, so folgt der Schritt 340. Ist der Hauptzylinderdruck PHZ dagegen größer als der Schwellwert HV, so folgt ein Schritt 354, in dem der Schwellwert HR gemäß dem Zusammenhang

$$HR = \frac{MV}{MR} PHZ$$

berechnet wird.

Dem Schritt 354 schließt sich ein Schritt 370 an. Im Schritt 370 erfolgt die Ansteuerung der Rückförderpumpen 25, 125 und gegebenenfalls der Auslaßventile ASV1 und ASV2 beziehungsweise der Umschaltventile USV1 und USV2 so, daß der Bremsdruck PRZ1 bzw. PRZ2 um einen bestimmten Betrag vergrößert. bespielhafter Ausgestletung entspricht der Schritt 370 dem Schritt 370 in Fig. 3 der DE 195 01 760 A1.

Bei einer alternativen Ausführungsform ist vorgesehen, daß anstelle des Drucksensors 70 der Sensor 60 verwendet wird, der die Bestätigung des Bremspedals 40 unmittelbar erfaßt. Ein solcher Sensor 60 kann z. B. den Pedalweg bzw. den Weg des Kolben zur Betätigung des Hauptbremszylinders oder eine entsprechende Größe erfassen. Im Ablaufdiagramm gemäß Fig. 6 ist dann der Wert PHZ durch den Wert SPED zu ersetzen.

**Patentansprüche**

1. Verfahren zum Betrieb einer Fahrzeugbremsanlage, die zumindest eine Rückförderpumpe (25, 125) zum Aufbau eines Bremsdrucks (PRZ1, PRZ2) aufweist, wobei die Rückförderpumpe (25, 125), ein vor der Rückförderpumpe (25, 125) angeordnetes Ansaugventil (ASV1, ASV2) und/oder ein hinter der Rückförderpumpe (25, 125) angeordnetes Umschaltventil (USV1, USV2) in Abhängigkeit eines Bremsbefehls (BB) angesteuert werden,
**dadurch gekennzeichnet,**
daß die Rückförderpumpe (25, 125), das Ansaugventil (ASV1, ASV2) und/oder das Umschaltventil (USV1, USV2) derart angesteuert werden, daß der Zusammenhang zwischen dem Bremsbefehl (BB) und dem Bremsdruck (PRZ1, PRZ2) hystereseartig ist.

2. Verfahren nach Anspruch 1,
**dadurch gekennzeichnet,**
daß die Rückförderpumpe (25, 125) derart angesteuert wird, daß der Zusammenhang zwischen dem Bremsbefehl (BB) und dem Bremsdruck (PRZ1, PRZ2) hystereseartig ist.

3. Verfahren nach Anspruch 1 oder 2,
**dadurch gekennzeichnet,**
daß das Ansaugventil (ASV1, ASV2) derart angesteuert wird, daß der Zusammenhang zwischen dem Bremsbefehl (BB) und dem Bremsdruck (PRZ1, PRZ2) hystereseartig ist.

4. Verfahren nach Anspruch 1, 2 oder 3,
**dadurch gekennzeichnet,**
daß das Umschaltventil (USV1, USV2) derart angesteuert wird, daß der Zusammenhang zwischen dem Bremsbefehl (BB) und dem Bremsdruck (PRZ1, PRZ2) hystereseartig ist.

5. Verfahren nach einem der vorhergehenden Ansprüche, wobei die Fahrzeugbremsanlage einen Hauptbremszylinder (15) zur Einstellung eines auf den Bremsdruck (PRZ1, PRZ2) wirkenden Hauptzylinderdrucks (PHZ) aufweist,
**dadurch gekennzeichnet,**
daß der Hauptzylinderdruck (PHZ) der Bremsbefehl (BB) ist.

6. Verfahren nach einem der Ansprüche 1 bis 4, wobei die Fahrzeugbremsanlage ein Bremspedal (40) zur Einstellung des Bremsdrucks (PRZ1, PRZ2) aufweist,
**dadurch gekennzeichnet,**
daß die Stellung (SPED) des Bremspedals (40) der Bremsbefehl (BB) ist.

7. Verfahren nach einem der vorhergehenden Ansprüche,
**dadurch gekennzeichnet,**
daß die Rückförderpumpe (25, 125), das Ansaugventil (ASV1, ASV2) und/oder das Umschaltventil (USV1, USV2) derart angesteuert werden, daß sich der Zusammenhang zwischen dem Bremsbefehl (BB) und dem Bremsdruck (PRZ1, PRZ2) bei Vergrößerung des Bremsbefehls (BB) vom dem Zusammenhang zwischen dem Bremsbefehl (BB) und dem Bremsdruck (PRZ1, PRZ2) bei Verringerung des Bremsbefehls (BB) unterscheidet.

**8.** Verfahren nach einem der vorhergehenden Ansprüche,
**dadurch gekennzeichnet,**
daß die Rückförderpumpe (25, 125), das Ansaugventil (ASV1, ASV2) und/oder das Umschaltventil (USV1, USV2) derart angesteuert werden, daß der Bremsdruck (PRZ1, PRZ2) bei Vergrößerung des Bremsbefehls (BB) geringer steigt, als er bei Verringerung des Bremsbefehls (BB) sinkt.

**9.** Fahrzeugbremsanlage, die zumindest eine Rückförderpumpe (25, 125), ein vor der Rückförderpumpe (25, 125) angeordnetes Ansaugventil (ASV1, ASV2) und/oder ein hinter der Rückförderpumpe (25, 125) angeordnetes Umschaltventil (USV1, USV2) zum Aufbau eines Bremsdrucks (PRZ1, PRZ2) in Abhängigkeit eines Bremsbefehls (BB), insbesondere gemäß einem Verfahren nach einem der vorhergehenden Ansprüche,
**dadurch gekennzeichnet,**
daß die Fahrzeugbremsanlage einen Hystereseblock zur derartigen Ansteuerung der Rückförderpumpe (25, 125), des Ansaugventils (ASV1, ASV2) und/oder des Umschaltventils (USV1, USV2), daß der Zusammenhang zwischen dem Bremsbefehl (BB) und dem Bremsdruck (PRZ1, PRZ2) hystereseartig ist.

**Amended claims in accordance with Rule 86(2) EPC.**

**1.** Verfahren zum Betrieb einer Fahrzeugbremsanlage, die zumindest eine Rückförderpumpe (25, 125) zum Aufbau eines Bremsdrucks (PRZ1, PRZ2) aufweist, wobei die Rückförderpumpe (25, 125), ein vor der Rückförderpumpe (25, 125) angeordnetes Ansaugventil (ASV1, ASV2) und/oder ein hinter der Rückförderpumpe (25, 125) angeordnetes Umschaltventil (USV1, USV2) in Abhängigkeit eines Bremsbefehls (BB) angesteuert werden,
**dadurch gekennzeichnet,**
daß die Rückförderpumpe (25, 125), das Ansaugventil (ASV1, ASV2) und/oder das Umschaltventil (USV1, USV2) derart angesteuert werden, daß der Zusammenhang zwischen dem Bremsbefehl (BB) und dem Bremsdruck (PRZ1, PRZ2) hystereseartig ist.

**3.** Verfahren nach Anspruch 1,
**dadurch gekennzeichnet,**
daß die Rückförderpumpe (25, 125) derart angesteuert wird, daß der Zusammenhang zwischen dem Bremsbefehl (BB) und dem Bremsdruck (PRZ1, PRZ2) hystereseartig ist.

**4.** Verfahren nach Anspruch 1, 2 oder 3,
**dadurch gekennzeichnet,**
daß das Ansaugventil (ASV1, ASV2) derart angesteuert wird, daß der Zusammenhang zwischen dem Bremsbefehl (BB) und dem Bremsdruck (PRZ1, PRZ2) hystereseartig ist.

**5.** Verfahren nach Anspruch 1, 2, 3 oder4,
**dadurch gekennzeichnet,**
daß das Umschaltventil (USV1, USV2) derart angesteuert wird, daß der Zusammenhang zwischen dem Bremsbefehl (BB) und dem Bremsdruck (PRZ1, PRZ2) hystereseartig ist.

**6.** Verfahren nach einem der vorhergehenden Ansprüche, wobei die Fahrzeugbremsanlage einen Hauptbremszylinder (15) zur Einstellung eines auf den Bremsdruck (PRZ1, PRZ2) wirkenden Hauptzylinderdrucks (PHZ) aufweist,
**dadurch gekennzeichnet,**
daß der Hauptzylinderdruck (PHZ) der Bremsbefehl (BB) ist.

**7.** Verfahren nach einem der Ansprüche 1 bis 5, wobei die Fahrzeugbremsanlage ein Bremspedal (40) zur Einstellung des Bremsdrucks (PRZ1, PRZ2) aufweist,
**dadurch gekennzeichnet,**
daß die Stellung (SPED) des Bremspedals (40) der Bremsbefehl (BB) ist.

**8.** Verfahren nach einem der vorhergehenden Ansprüche,
**dadurch gekennzeichnet,**
daß die Rückförderpumpe (25, 125), das Ansaugventil (ASV1, ASV2) und/oder das Umschaltventil (USV1, USV2) derart angesteuert werden, daß sich der Zusammenhang zwischen dem Bremsbefehl (BB) und dem Bremsdruck (PRZ1, PRZ2) bei Vergrößerung des Bremsbefehls (BB) vom dem Zusammenhang zwischen dem Bremsbefehl (BB) und dem Bremsdruck (PRZ1, PRZ2) bei Verringerung des Bremsbefehls (BB) unterscheidet.

**9.** Verfahren nach einem der vorhergehenden Ansprüche,
**dadurch gekennzeichnet,**
daß die Rückförderpumpe (25, 125), das Ansaugventil (ASV1, ASV2) und/oder das Umschaltventil (USV1, USV2) derart angesteuert werden, daß der Bremsdruck (PRZ1, PRZ2 ) bei Vergrößerung des Bremsbefehls (BB) geringer steigt, als er bei Verringerung des Bremsbefehls (BB) sinkt.

**10.** Fahrzeugbremsanlage, die zumindest eine Rückförderpumpe (25, 125), ein vor der Rückförderpumpe (25, 125) angeordnetes Ansaugventil (ASV1, ASV2) und/oder ein hinter der Rückförderpumpe (25, 125) angeordnetes Umschaltventil (USV1, USV2) zum Aufbau eines Bremsdrucks (PRZ1, PRZ2) in Abhängigkeit eines Bremsbefehls (BB), insbesondere gemäß einem Verfahren nach einem der vorhergehenden Ansprüche,
**dadurch gekennzeichnet,**
daß die Fahrzeugbremsanlage einen Hystereseblock zur derartigen Ansteuerung der Rückförderpumpe (25, 125), des Ansaugventils (ASV1, ASV2) und/oder des Umschaltventils (USV1, USV2), daß der Zusammenhang zwischen dem Bremsbefehl (BB) und dem Bremsdruck (PRZ1, PRZ2) hystereseartig ist.

FIG. 1

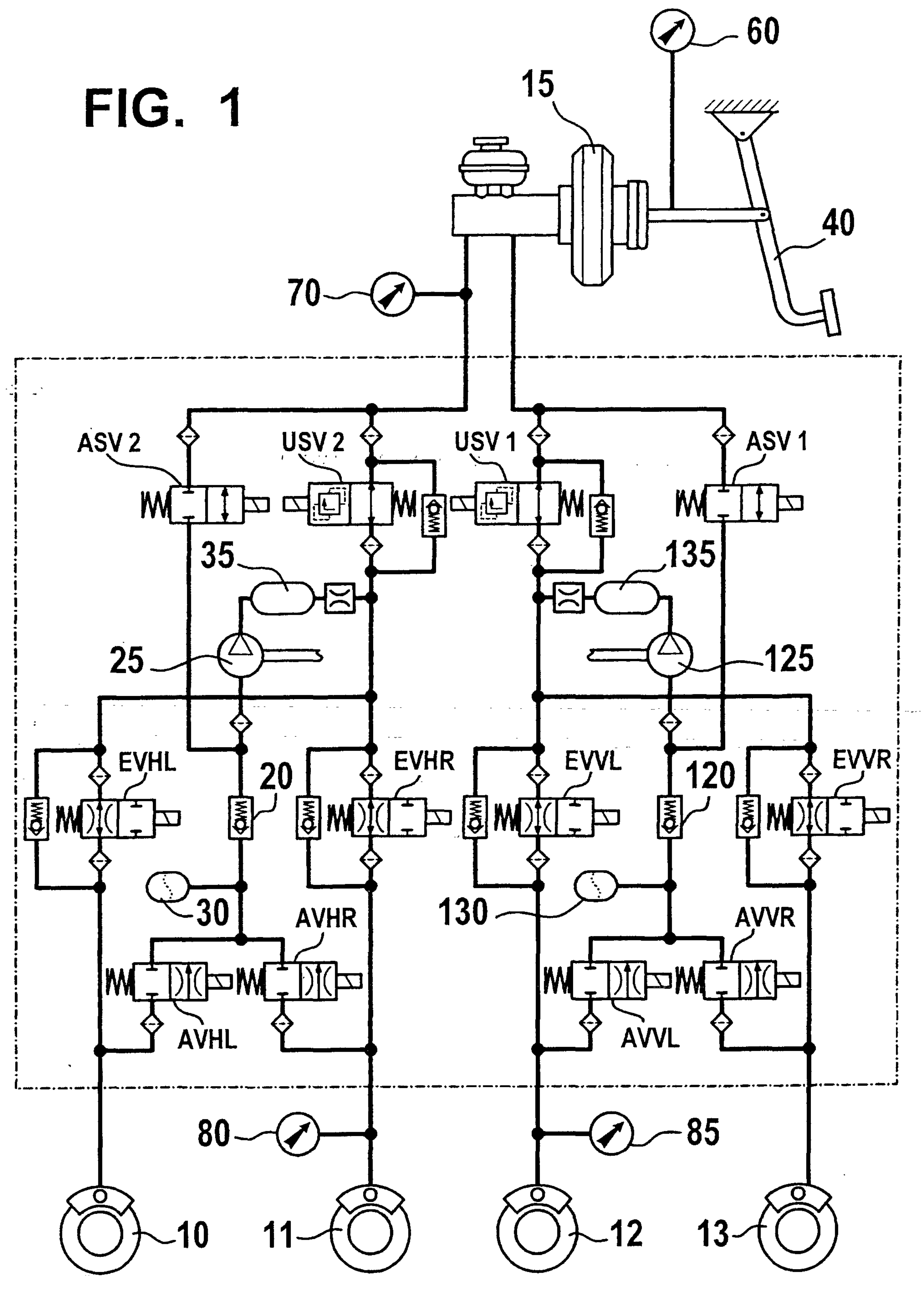
60
15
40
70
ASV 2
USV 2
USV 1
ASV 1
35
135
25
125
EVHL
20
EVHR
EVVL
120
EVVR
30
130
AVHR
AVVR
AVHL
AVVL
80
85
10
11
12
13

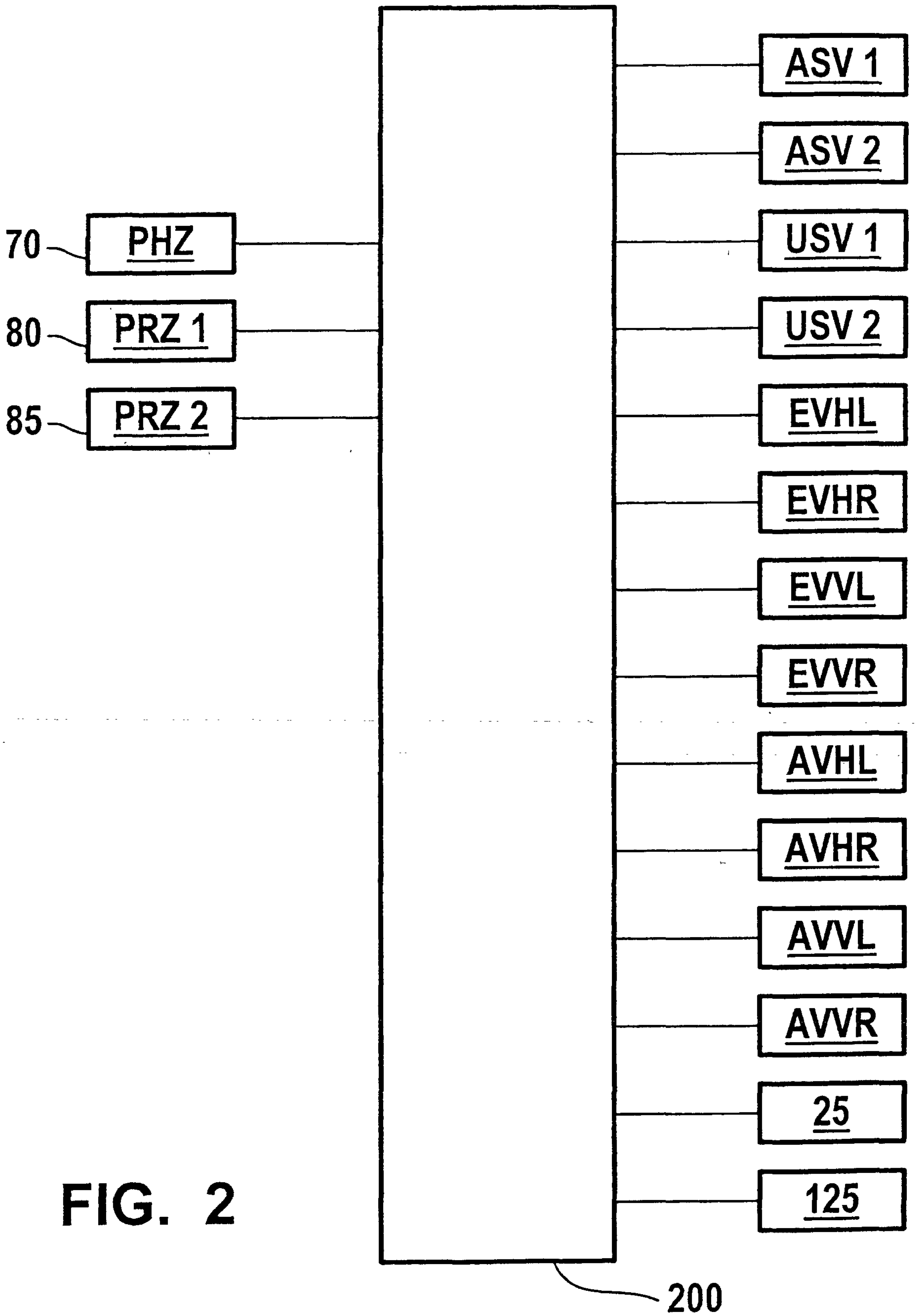
70
PHZ
80
PRZ 1
85
PRZ 2
ASV 1
ASV 2
USV 1
USV 2
EVHL
EVHR
EVVL
EVVR
AVHL
AVHR
AVVL
AVVR
25
125
200

FIG. 2

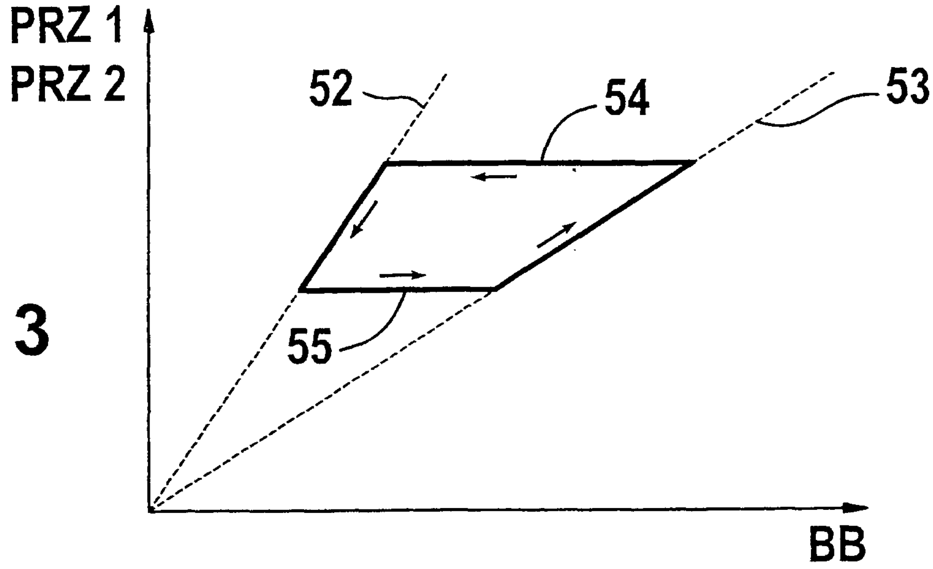


FIG. 3

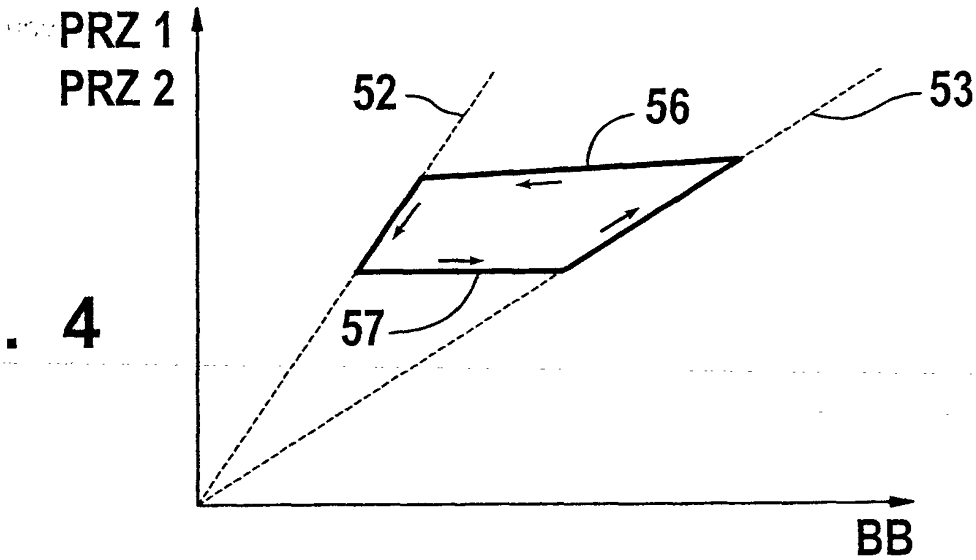


FIG. 4

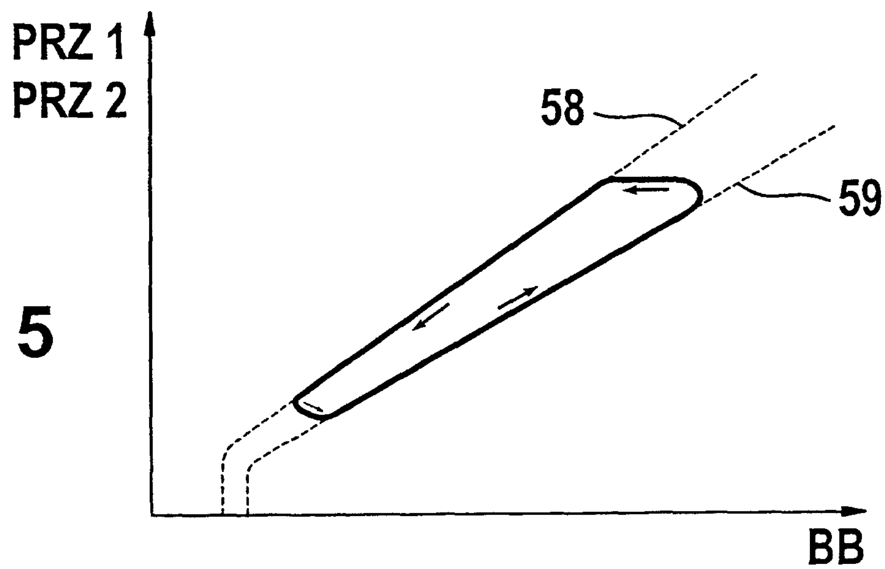


FIG. 5

FIG. 6

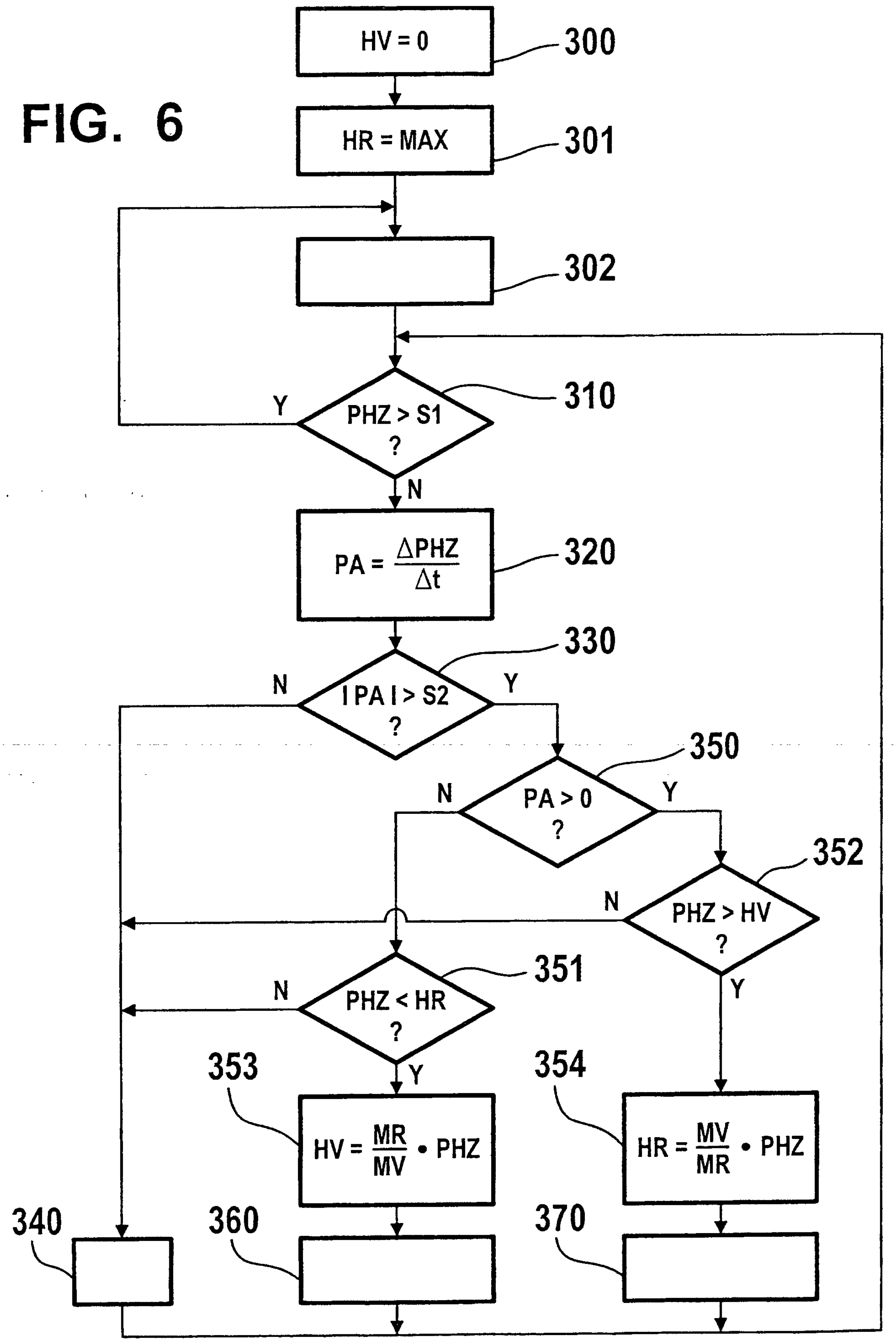
HV = 0
300
HR = MAX
301
302
PHZ > S1 ?
310
Y
N
PA = ΔPHZ / Δt
320
I PA I > S2 ?
330
N
Y
PA > 0 ?
350
N
Y
PHZ > HV ?
352
N
Y
PHZ < HR ?
351
N
Y
353
HV = MR / MV • PHZ
354
HR = MV / MR • PHZ
340
360
370

Europäisches Patentamt

# EUROPÄISCHER RECHERCHENBERICHT

Nummer der Anmeldung
EP 99 12 6203

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | DE 195 01 760 A (BOSCH GMBH ROBERT)<br>25. Juli 1996 (1996-07-25)<br>* Spalte 1, Zeile 54 - Spalte 7, Zeile 34; Ansprüche 1-4,7,8,10; Abbildungen 1-3 * | 1,3-10 | B60T8/44<br>B60T8/48 |
| X | EP 0 800 975 A (DENSO CORP)<br>15. Oktober 1997 (1997-10-15)<br>* Spalte 9, Zeile 5 - Zeile 56; Abbildungen 6,7 *<br>* Spalte 16, Zeile 41 - Spalte 17, Zeile 28 *<br>* Spalte 18, Zeile 54 - Spalte 19, Zeile 5; Abbildung 15 * | 1,3,8-10 | |
| X | US 5 445 189 A (YAMAMURO SHIGEAKI)<br>29. August 1995 (1995-08-29)<br>* Spalte 9, Zeile 61 - Spalte 10, Zeile 6; Abbildung 5 *<br>* Spalte 11, Zeile 64 - Spalte 12, Zeile 36; Abbildung 2 * | 1,5,8-10 | |
| X | DE 44 38 721 A (TEVES GMBH ALFRED)<br>2. Mai 1996 (1996-05-02)<br>* Spalte 2, Zeile 61 - Spalte 3, Zeile 1; Ansprüche 1,3; Abbildung 1 * | 1,4,10 | RECHERCHIERTE SACHGEBIETE (Int.Cl.7)<br>B60T |
| A | PATENT ABSTRACTS OF JAPAN<br>vol. 1999, no. 15,<br>31. Januar 1900 (1900-01-31)<br>-& JP 11 291894 A (JIDOSHA KIKI CO LTD), 26. Oktober 1999 (1999-10-26)<br>* Zusammenfassung * | 1,10 | |

Der vorliegende Recherchenbericht wurde für alle Patentansprüche erstellt

| Recherchenort | Abschlußdatum der Recherche | Prüfer |
|---|---|---|
| DEN HAAG | 18. April 2000 | Meijs, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 99 12 6203

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-04-2000

| Im Recherchenbericht angeführtes Patentdokument | Datum der Veröffentlichung | Mitglied(er) der Patentfamilie | Datum der Veröffentlichung |
|---|---|---|---|
| DE 19501760 A | 25-07-1996 | FR 2729626 A | 26-07-1996 |
| | | GB 2297134 A,B | 24-07-1996 |
| | | JP 8230634 A | 10-09-1996 |
| | | US 5727852 A | 17-03-1998 |
| EP 0800975 A | 15-10-1997 | JP 9328069 A | 22-12-1997 |
| | | US 5954406 A | 21-09-1999 |
| US 5445189 A | 29-08-1995 | JP 6206535 A | 26-07-1994 |
| DE 4438721 A | 02-05-1996 | KEINE | |
| JP 11291894 A | 26-10-1999 | KEINE | |

EPO FORM P0461

Für nähere Einzelheiten zu diesem Anhang : siehe Amtsblatt des Europäischen Patentamts, Nr.12/82